# EUROPÄISCHE PATENTANMELDUNG

(11) **EP 2 382 863 A1**
(43) Veröffentlichungstag der Anmeldung: **02.11.2011**
(21) Anmeldenummer: 11401065.5
(22) Anmeldetag: 26.04.2011
(51) Int. Cl.: A01M 7/00, B60K 11/04

(54) **Selbstfahrende landwirtschaftliche Arbeitsmaschine**

(30) Priorität: 28.04.2010 DE 102010016664
(71) Anmelder: Amazonen-Werke H. Dreyer GmbH & Co. KG, 49205 Hasbergen (DE)
(72) Erfinder: Ehlen, Volker, 49205, Hasbergen (DE)

(57) **Zusammenfassung**

Selbstfahrende landwirtschaftliche Arbeitsmaschine, insbesondere Pflanzenschutzspritze mit einem sich auf dem Boden über Laufräder (1), von denen zumindest einige mittels eines Antriebsmotors angetrieben sind, abstützenden Rahmen (2), einer im vorderen Bereich (3) des Rahmens (2) angeordneten Fahrerkabine (4), am Rahmen (2) im Bereich der Fahrerkabine (4) angeordneten Kühlerelementen (9) zumindest zur Kühlung der Kühlflüssigkeit für den Antriebsmotor und/oder der Ladeluft für den Antriebsmotor und/oder Hydraulikflüssigkeit der Hydraulikanlage der Arbeitsmaschine, wobei die Kühlerelemente (9) in der Draufsicht gesehen in der Ebene (10) hinter der Fahrerkabine (4) angeordnet sind. Um eine verbesserte Anordnung der Kühlerelemente und deren Luftzuleitung wesentlich einfacher und verbesserter auszugestalten, ist vorgesehen, dass die Kühlerelemente (9) in Draufsicht gesehen zusätzlich mit mehr als ihrer halben Breite in einem Bereich (11) seitlich versetzt neben der Fahrerkabine (4) angeordnet sind und zwar derart, dass die Lufteinlässe (12) der Kühlerelemente (9) von der Luft (13) seitlich der Fahrerkabine (4) unmittelbar anströmbar sind.

## Beschreibung

Die Erfindung betrifft eine selbstfahrende
landwirtschaftliche Arbeitsmaschine gemäß des Oberbegriffes des Patentanspruches 1.

Eine derartige landwirtschaftliche Arbeitsmaschine ist durch den Prospekt Amazone SX mit Druckvermerk MI 2621 (D) 10.09 bekannt geworden. Diese selbstfahrende landwirtschaftliche Arbeitsmaschine ist als selbstfahrende Feldspritze ausgebildet. Diese Feldspritze weist einen sich auf Laufräder auf dem Boden abstützenden Rahmen auf. Auf der Vorderseite des Rahmens ist eine Fahrerkabine angeordnet, die schmaler als der Rahmen ist. Unterhalb der Fahrerkabine und innerhalb des Rahmens ist ein Antriebsmotor angeordnet. Diesem Antriebsmotor sind Kühlerelemente zur Kühlung der Kühlflüssigkeit für den Antriebsmotor zugeordnet. Dieses Kühlerelement ist unterhalb der Fahrerkabine angeordnet. Dem Kühlerelement sind beim Einsatz unter staubigen Einsatzverhältnissen Luftleiteinrichtungen zugeordnet, wobei die Lufteinlässe sich vor der Fahrerkabine und mit Abstand zum unteren Ende des Rahmens befinden. Weiterhin ist ein Kühlerelement seitlich der Fahrerkabine und oberhalb des Rahmens angeordnet. Hierbei sind die Lufteinlässe für dieses Kühlerelement seitlich und nicht in Fahrtrichtung ausgerichtet.

Eine weitere selbstfahrende Arbeitsmaschine ist beispielsweise durch die DE 10 2004 031 435 A1 bekannt. Diese Arbeitsmaschine ist als Kehrmaschine ausgebildet. Diese Kehrmaschine weist einen sich auf Laufräder auf dem Boden abstützenden Rahmen auf. Auf der Vorderseite des Rahmens ist eine Fahrerkabine angeordnet. Innerhalb des Rahmens und hinter der Fahrerkabine ist der Antriebsmotor angeordnet. Des weiteren sind hinter der Fahrerkabine und oberhalb des Rahmens Kühlerelemente zur Kühlung der Kühlflüssigkeit für den Antriebsmotor angeordnet. Um diesen Kühlerelementen Luft zur Kühlung zuzuführen, sind den Kühlerelementen aufwändig ausgestaltete Luftleitelemente mit Ansaugöffnungen vorgeschaltet. Diese Luftleitelemente sind hinter der Fahrerkabine angeordnet, wobei die Ansaugöffnungen sich hinter der Fahrerkabine befinden und zur Seite ausgerichtet sind. Die Luft wird also von der Seite her angesaugt.

Der Erfindung liegt die Aufgabe zu Grunde eine verbesserte Anordnung der Kühlerelemente vorzuschlagen und die Luftzuleitung zu den Kühlerelementen wesentlich einfacher und verbesserter auszugestalten.

Diese Aufgabe wird erfindungsgemäß dadurch gelöst, dass die Kühlerelemente in Draufsicht gesehen zusätzlich mit mehr als ihrer halben Breite in einem Bereich seitlich versetzt neben der Fahrerkabine angeordnet sind und zwar derart, dass die Lufteinlässe der Kühlerelemente von der Luft seitlich der Fahrerkabine unmittelbar anströmbar sind. Infolge dieser Maßnahmen sind die Kühlerelemente in einem Bereich angeordnet, in welchem sie unmittelbar von dem Fahrtwind, der seitlich an der Fahrerkabine vorbeistreicht, unmittelbar angeströmt werden. Hierdurch wird eine optimale und direkte Anströmung der Kühlerelemente durch die Kühlluft ohne aufwändige Luftleitelemente gewährleistet.

Um den Lufteinlässen die Kühlluft auf direktem Wege gezielt zuzuführen, ist vorgesehen, dass vor den Lufteinlässen der Kühlerelemente Luftleitelemente angeordnet sind.

Besonders vorteilhaft lassen sich die Kühlerelemente seitlich und im Bereich hinter der Fahrerkabine anordnen, wenn der Rahmen im Bereich der Fahrerkabine die seitlichen Außenbereiche der Fahrerkabine um zumindest annähernd das Maß der Breite der Kühlerelemente überragt. Hierdurch befinden sich die Kühlerelemente in einem geschützten Bereich. Außerdem ermöglicht diese Anordnung einen ungehinderten Zugang zu der Fahrerkabine.

In einer Ausführung ist vorgesehen, dass die Kühlerelemente oberhalb des vorderen Bereich des der vorderen Laufrädern des Fahrwerkes angeordnet sind.

Um eine direkte Anströmung der Kühlerelemente durch die seitlich an der Fahrerkabine vorbeiströmende Luft zu ermöglichen, ist vorgesehen, dass die Kühlerelemente mit ihrer flächigen Seite, in welcher sich die Lufteinlässe befinden, in Fahrtrichtung weisen. Durch die Ausnutzung des Fahrwindes wird eine hohe Kühleffektivität erreicht.

Weitere Einzelheiten der Erfindung sind der Beispielsbeschreibung und den Zeichnungen zu entnehmen. Hierbei zeigen
- Fig. 1: die selbstfahrende landwirtschaftliche Pflanzenschutzspritze in Seitenansicht und in Prinzipdarstellung,
- Fig.2: die Pflanzenschutzspritze in Vorderansicht und Prinzipdarstellung und
- Fig. 3: die Pflanzenschutzspritze in Draufsicht und in Prinzipdarstellung.

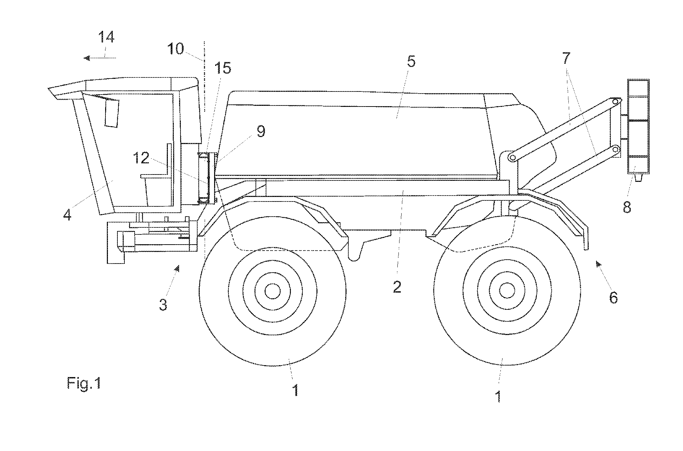

Die selbstfahrende Arbeitsmaschine gemäß den Figuren 1-3 ist als Pflanzenschutzspritze ausgebildet. Die

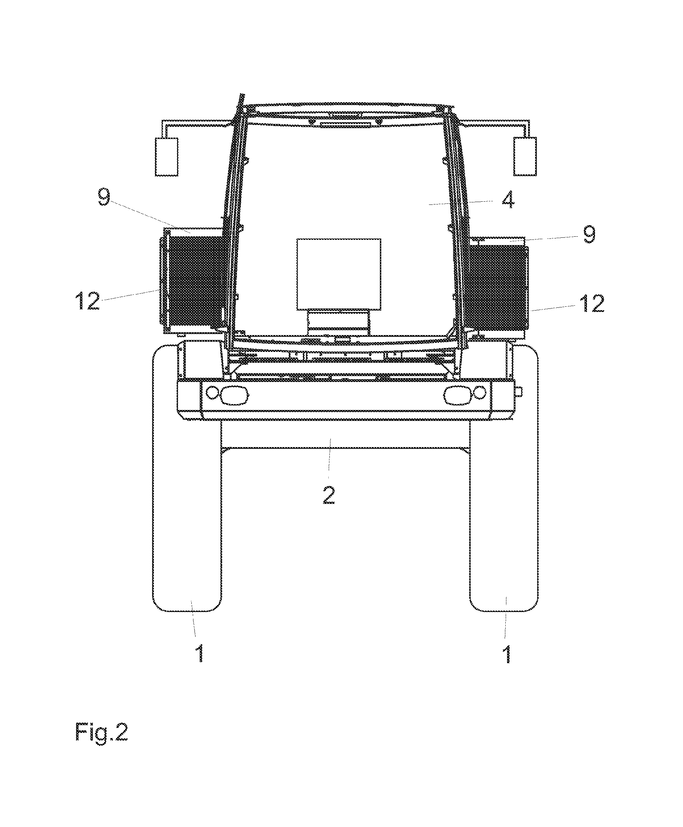

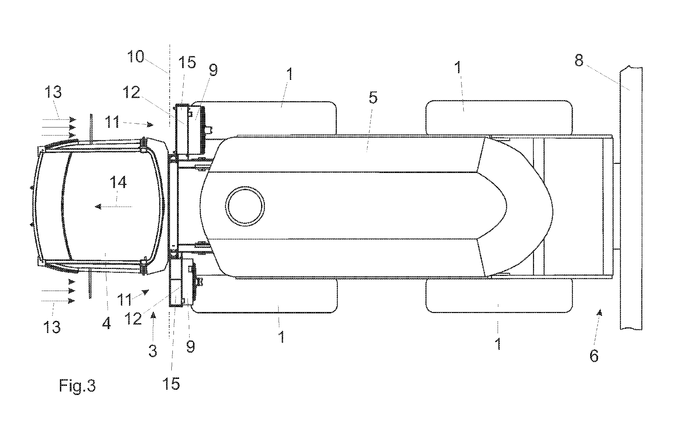

Pflanzenschutzspritze weist den sich auf dem Boden über die Laufräder 1 abstützenden Rahmen 2 auf. Zumindest einige der Laufräder 1 werden von einem nicht dargestellten Antriebsmotor angetrieben. An der Vorderseite 3 des Rahmens 2 ist die Fahrerkabine 4 angeordnet. Die Fahrerkabine 4 weist, wie die Fig. 1 und 3 zeigen, eine Breite auf, die schmaler als die Breite des Rahmens 2 ist. Hinter der Fahrerkabine 4 ist auf dem Rahmen 2 der Flüssigkeitstank 5 der Pflanzenschutzspritze angeordnet. An der Rückseite 6 des Rahmens 2 ist über eine höhenverstellbare Haltevorrichtung 7 das Verteilergestänge 8, welches der Übersichtlichkeit halber in Fig. 2 nicht dargestellt ist, angeordnet.

Auf beiden Seiten der Pflanzenschutzspritze sind Kühlerelemente 9, welche zumindest zur Kühlung der Kühlflüssigkeit für den Antriebsmotor, der Flüssigkeiten Hydraulikanlagen der Arbeitsmaschine und/oder der Ladeluft für den Antriebsmotor vorgesehen sind, angeordnet.

Diese Kühlerelemente 9 sind, wie die Fig. 1-3 zeigen in der Draufsicht gesehen in der Ebene 10 hinter der Fahrerkabine 4 angeordnet und gleichzeitig zusätzlich mit mehr als ihrer halben Breite in einem Bereich 11 seitlich versetzt neben der Fahrerkabine 4 angeordnet. Hierbei ist die Anordnung so gewählt, dass die Lufteinlässe 12 der Kühlerelemente 9 von der Luft 13 seitlich der Fahrerkabine 4 unmittelbar angeströmt werden, um die Geschwindigkeit des Fahrtwindes zur Zuführung der Kühlluft 13 über die Lufteinlässe 12 zu den Kühlerelementen 9 zu unterstützen. Hierbei ist vorteilhaft, wenn die Kühlerelemente 9, wie in den Zeichnungen dargestellt, so angeordnet sind, dass die Kühlerelemente 9 mit ihrer flächigen Seite, in welcher sich die Lufteinlässe 12 befinden, in Fahrtrichtung 14 weisen. Hierdurch wird die direkte Anströmung der Kühlerelemente 9 auf der gesamten größtmöglichen Fläche in einfacher Weise erreicht.

Eine weitere gezielte Zuführung der Kühlluft 13 über die Lufteinlässe 12 zu den Kühlerelementen 9 kann auch dadurch verstärkt werden, dass vor den Lufteinlässen 12 Luftleitelemente 15 mit einem Ventilator angeordnet sind.

Des weiteren sind die Kühlerelemente 9 oberhalb des vorderen Bereiches der vorderen Laufrädern 1 des Fahrwerkes angeordnet, wie die Fig. 1 und 3 zeigen.

## Patentansprüche

1. Selbstfahrende landwirtschaftliche Arbeitsmaschine, insbesondere Pflanzenschutzspritze mit einem sich auf dem Boden über Laufräder, von denen zumindest einige mittels eines Antriebsmotors angetrieben sind, abstützenden Rahmen, einer im vorderen Bereich des Rahmens angeordneten Fahrerkabine, am Rahmen im Bereich der Fahrerkabine angeordneten Kühlerelementen zumindest zur Kühlung der Kühlflüssigkeit für den Antriebsmotor und/oder der Ladeluft für den Antriebsmotor und/oder Hydraulikflüssigkeit der Hydraulikanlage der Arbeitsmaschine, wobei die Kühlerelemente in der Draufsicht gesehen in der Ebene hinter der Fahrerkabine angeordnet sind, **dadurch gekennzeichnet, dass** die Kühlerelemente (9) in Draufsicht gesehen zusätzlich mit mehr als ihrer halben Breite in einem Bereich seitlich versetzt neben der Fahrerkabine (4) angeordnet sind und zwar derart, dass die Lufteinlässe (12) der Kühlerelemente (9) von der Luft (13) seitlich der Fahrerkabine (4) unmittelbar anströmbar sind.

2. Arbeitsmaschine nach Anspruch 1, **dadurch gekennzeichnet, dass** vor den Lufteinlässen (12) der Kühlerelemente (9) Luftleitelemente (15) angeordnet sind.

3. Arbeitsmaschine nach Anspruch 1, **dadurch gekennzeichnet, dass** der Rahmen (2) im Bereich der Fahrerkabine (4) die seitlichen Außenbereiche der Fahrerkabine (4) um zumindest annähernd das Maß der Breite der Kühlerelemente (9) überragt.

4. Arbeitsmaschine nach zumindest einem der vorstehenden Ansprüche, **dadurch gekennzeichnet, dass** die Kühlerelemente (9) oberhalb des vorderen Bereich des der vorderen Laufrädern (19 des Fahrwerkes angeordnet sind.

5. Arbeitsmaschine nach zumindest einem der vorstehenden Ansprüche, **dadurch gekennzeichnet, dass** die Kühlerelemente (9) mit ihrer flächigen Seite, in welcher sich die Lufteinlässe (12) befinden, in Fahrtrichtung (14) weisen.
